# EUROPEAN PATENT APPLICATION

(11) **EP 2 254 345 A1**
(43) Date of publication of application: **24.11.2010**
(21) Application number: 09721449.8
(22) Date of filing: 17.03.2009
(51) Int. Cl.: H04R 1/00, H04R 1/10

(54) **BONE CONDUCTION SPEAKER AND LISTENING DEVICE USING SAME**

(30) Priority: 17.03.2008 JP 2008068092
(71) Applicant: Temco Japan Co., Ltd., Tokyo 168-0062 (JP)
(72) Inventor: FUKUDA, Mikio, Tokyo 168-0062 (JP)
(74) Representative: Novagraaf Technologies
(86) International application number: PCT/JP2009/001187
(87) International publication number: WO 2009/116272

(57) **Abstract**

To provide a bone conduction speaker that enables a wearer to hear a bone-conducted sound and an air-conducted sound caused by the bone-conducted sound to improve the quality and depth of the sound and allows the wearer to hear external sounds to improve the safety in outdoor use, and a hearing device using the same. When a bone conduction speaker is fitted in an auricle, a part 4, 5 or 6 of a main body 1 of the bone conduction speaker abuts against the entrance and/or the periphery of the entrance of the external auditory meatus to conduct a vibration of the entrance and/or the periphery of the entrance of the external auditory meatus, and a sound pressure caused by the vibration of the entrance and/or the periphery of the entrance of the external auditory meatus conducted by the abutting part is transmitted to the tympanic membrane through the external auditory meatus.

## Description

### Technical Field

The present invention relates to a bone conduction speaker and a hearing device using the same. In particular, it relates to a bone conduction speaker that enables a wearer to hear not only a bone-conducted sound but also an air-conducted sound associated therewith and is designed not to block the external auditory meatus during use to allow the wearer to hear external sounds, and a hearing device using the same bone conduction speaker.

### Background Art

Many hearing devices using a bone conduction speaker are designed on the concept that the bone-conducted sound is optimally transmitted when the bone conduction speaker is in contact with the rear peripheral part of the auricle or the front part of the antilobium. This is because the periphery of the auricle is generally considered as the optimal part for conduction of vibrations.

By the way, not all so-called hearing-impaired people are completely hearing-impaired, and many actually have partially functioning tympanic membranes. This particularly holds true for elderly people. In this regard, if the hearing device is configured to enable the wearer to hear not only the bone-conducted sound but also the associated air-conducted sound, the quality and depth of sound can be improved. In addition, if the hearing device is designed to allow the wearer to hear external sounds, the hearing device can be more safely used outdoors.

A known example of the hearing device that enables the wearer to hear both the bone-conducted sound and the air-conducted sound is a spectacles-type hearing device that has bone conduction speakers embedded in the tip ends of the temples of the spectacles and is used by bringing the diaphragm into contact with the rear of the auricle (see Japanese Patent Laid-Open No. 2006-109192, for example). However, this hearing device has a disadvantage that the bone-conducted sound can be hard to hear depending on the condition of the contact between the bone conduction speaker and the rear of the auricle. And fundamentally, this invention is not intended to enable the wearer to hear both the bone-conducted sound and the air-conducted sound caused thereby to improve the quality and depth of the sound.

Another known example is a headphone-type hearing device (see Japanese Utility Model Laid-Open No. 3118131, for example). This device is designed to hold by pressure the bone conduction speaker at the periphery of the auricle, in particular, the front part of the antilobium. To this end, however, this device has a holder that rests on the auricle and extends to the front of the antilobium, and many people hesitate to wear it because it would make them look bad. In addition, this device is also not intended to enable the wearer to hear both the bone-conducted sound and the air-conducted sound caused thereby to improve the quality and depth of the sound.

Patent Document 1: Japanese Patent Laid-Open No. 2006-109192
Patent Document 2: Japanese Utility Model Laid-Open No. 3118131

### Disclosure of the Invention

### Problems to be Solved by the Invention

The present invention has been devised in view of the problems of the conventional bone conduction speaker and the hearing device using the same described above. An object of the present invention is to provide a bone conduction speaker that enables a wearer to hear a bone-conducted sound and an air-conducted sound caused by the bone-conducted sound to improve the quality and depth of the sound and allows the wearer to hear external sounds to improve the safety in outdoor use, and a hearing device using the same.

### Means for Solving the Problems

In order to attain the object described above, according to Claim 1, the present invention provides a bone conduction speaker, wherein, when the bone conduction speaker is fitted in an auricle, a part of a main body of the bone conduction speaker abuts against an entrance and/or a periphery of the entrance of an external auditory meatus to conduct a vibration of the entrance and/or the periphery of the entrance of the external auditory meatus, and a sound pressure caused by the vibration of the entrance and/or the periphery of the entrance of the external auditory meatus conducted by the abutting part is transmitted to a tympanic membrane through the external auditory meatus. The part of the main body can be configured to prevent the main body from blocking the external auditory meatus.

The part of the main body that abuts against the entrance and/or the periphery of the entrance of the external auditory meatus may be a substantially C-shaped engaging part that is held by a shaft over a diaphragm surface of the main body and abuts against the entrance and/or the periphery of the entrance of the external auditory meatus. Alternatively, the part of the main body may be a protrusion that is formed on a diaphragm surface of the main body and abuts against the entrance and/or the periphery of the entrance of the external auditory meatus. Alternatively, the part of the main body may be a member that is formed on a diaphragm surface of the main body and abuts against the entrance and/or the periphery of the entrance of the external auditory meatus, and the member may have one or more grooves radially extending from a center thereof.

In order to attain the object described above, according to Claim 6, the present invention provides a spectacles-type hearing device having a bone conduction speaker having any of the configurations described above attached to a tip end of a temple having no ear hook, and the spectacles-type hearing device can be worn by engaging the bone conduction speaker in an auricle. In this case, it is preferred that the temple is retractable.

In order to attain the object described above, according to Claim 8, the present invention provides a spectacles-type hearing device having a bone conduction speaker having any of the configurations described above attached to a tip end of an auxiliary arm that branches off from midway point on a temple having an ear hook and extends toward an external auditory meatus. In this case, it is preferred that the auxiliary arm is retractable, and/or the auxiliary arm is pivotally attached to the temple.

In order to attain the object described above, according to Claim 11, the present invention provides a headset-type hearing device having any of the bone conduction speakers described above attached to a tip end of a band worn around a top or back of a head or a neck.

### Advantages of the Invention

As described above, for the bone conduction speaker and the hearing device using the same according to the present invention, when the bone conduction speaker is fitted in the auricle, a part of the main body of the bone conduction speaker is surrounded by and engaged with the surrounding ear concha, the antilobium, the antitragus and the like and abuts against the entrance and/or the periphery of the entrance of the external auditory meatus.
Thus, when the bone conduction speaker is fitted in the auricle, the abutting part conducts a vibration of the entrance and/or the periphery of the entrance of the external auditory meatus, and a sound pressure caused by the vibration of the entrance and/or the periphery of the entrance of the external auditory meatus conducted by the abutting part is transmitted to the tympanic membrane through the external auditory meatus.
Therefore, the wearer can hear both the bone-conducted sound and the air-conducted sound, so that the quality and depth of the sound is improved. In addition, the bone conduction speaker and the hearing device allow the wearer to hear external sounds and therefore can be safely used outdoors.

### Best Mode for Carrying Out the Invention

Best modes for carrying out the present invention will be described with reference to the accompanying drawings. When a bone conduction speaker according to the present invention is fitted in an auricle 20, a part of a main body 1 of the bone conduction speaker abuts against the entrance and/or the periphery of the entrance of an external auditory meatus 21, and the bone conduction speaker is surrounded by and engaged with an ear concha 22, an antilobium 23, an antitragus 24 and the like.

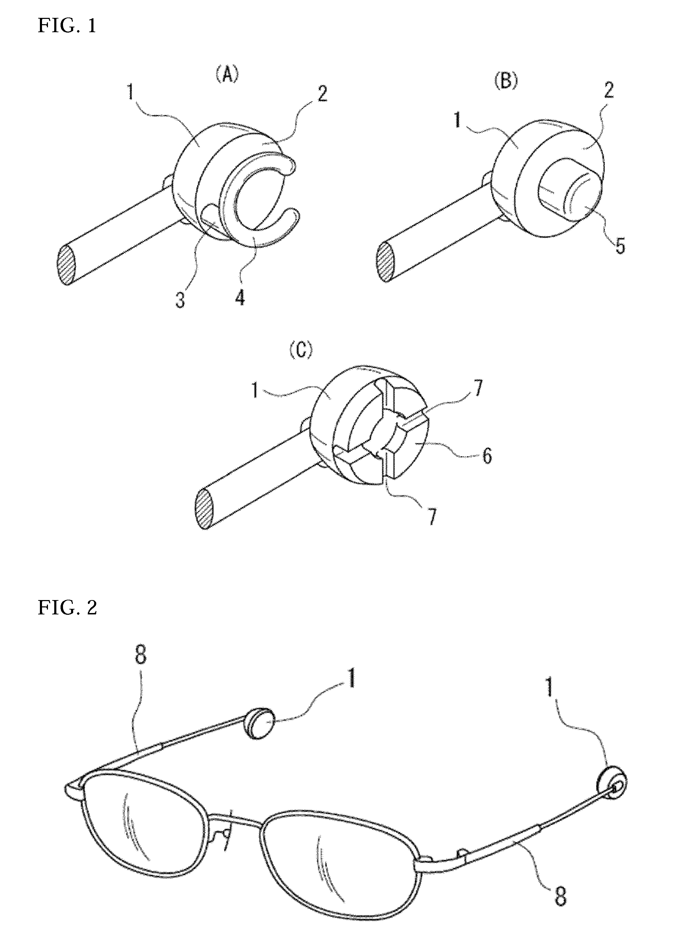

Figures 1(A) to 1(C) show exemplary configurations of a part of the main body 1 of the bone conduction speaker. Figure 1(A) shows a substantially C-shaped engaging part 4 that is held over a diaphragm surface 2 of the main body 1 by a shaft 3 and abuts against the entrance and/or the periphery of the entrance of the external auditory meatus 21. The engaging part 4 is made of a metal, a plastic or an elastic material, such as rubber, and is slightly spaced apart from the diaphragm surface 2 by the shaft 3.

The engaging part 4 abuts against the entrance and the periphery of the entrance of the external auditory meatus 21 to conduct a vibration of the diaphragm surface 2 when the bone conduction speaker is fitted in the auricle 20 and engaged with the ear concha 22, the antilobium 23, the antitragus 24 and the like. The C-shaped engaging part 4 has a notch and spaced apart from the diaphragm surface 2 by the shaft 3, so that a ventilation space is formed around the engaging part 4. Thus, air can pass through the external auditory meatus 21.

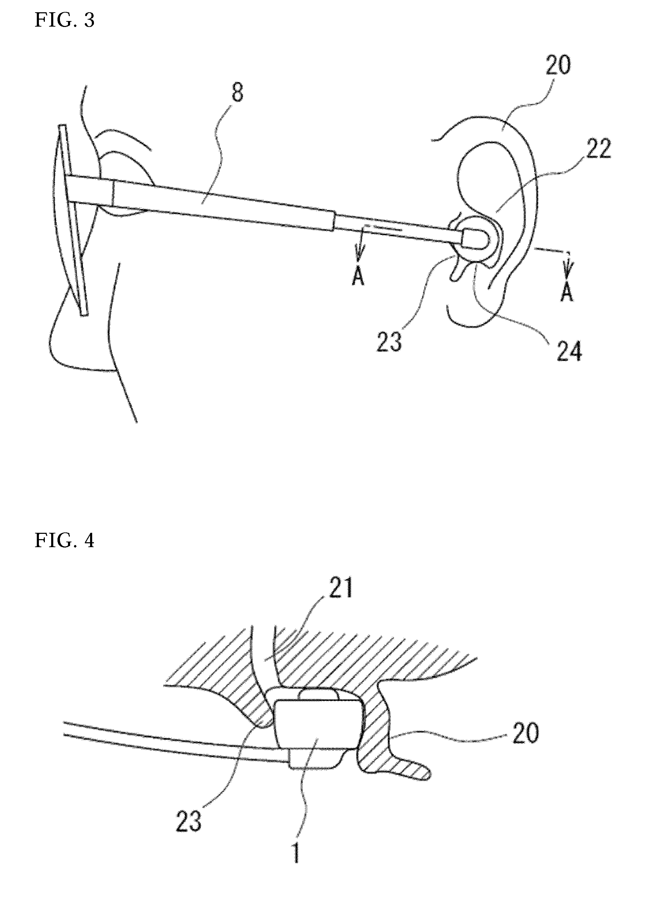

In Figure 1(B), the same part of the main body 1 is configured as a protrusion 5 made of a metal, a plastic or an elastic material, such as rubber, formed on the diaphragm surface 2. The protrusion 5 abuts against the entrance and/or the periphery of the entrance of the external auditory meatus 21 to conduct a vibration of the diaphragm surface 2 when the main body 1 of the bone conduction speaker is fitted in and engaged with the auricle 20. Typically, the protrusion 5 is not perfectly aligned with the entrance of the external auditory meatus 21, so that a ventilation space is formed around the protrusion 5 (see Figure 4). Therefore, the protrusion 5 allows air to pass through the external auditory meatus 21.

In Figure 1(C), the same part of the main body 1 is configured as a member 6 having four radially extending grooves 7 disposed on the diaphragm surface 2. The member 6 abuts against the entrance and/or the periphery of the entrance of the external auditory meatus 21 to conduct a vibration of the diaphragm surface 2 when the main body 1 of the bone conduction speaker is fitted in and engaged with the auricle 20. The grooves 7 serve as ventilation channels, so that air can pass through the external auditory meatus 21.

In any of the examples described above, when the bone conduction speaker is fitted in the auricle, a part of the main body 1 abuts against the entrance and/or the periphery of the entrance of the external auditory meatus 21 and is held there to conduct a bone vibration with reliability. At the same time, a sound pressure caused by the bone vibration of the entrance and/or the periphery of the entrance of the external auditory meatus 21 is transmitted to the tympanic membrane through the external auditory meatus 21. Thus, the wearer can hear not only the bone-conducted sound but also the air-conducted sound associated with the bone-conducted sound, so that the quality and depth of the sound are improved. In addition, since the bone conduction speaker allows the wearer to hear external sounds, the bone conduction speaker can be applied to provide a hearing device that can be safely used outdoors.

A hearing device according to the present invention uses any of the bone conduction speakers described above. For example, the hearing device may be a spectacles type as shown in Figures 3 and 4. The hearing device shown in Figure 3 has the bone conduction speaker attached to the tip end of a temple 8, which has no ear hook. In this case, typically, the temple 8 is designed to extend straight toward the external auditory meatus 21.

The distance between the hinge of the temple 8 and the external auditory meatus 21 varies with individuals. Therefore, the temple 8 is preferably retractable so that the main body 1 of the bone conduction speaker is properly fitted in the auricle 20. Any means can be used to provide the retractable temple 8. For example, the temple 8 can have a telescopically slidable structure.

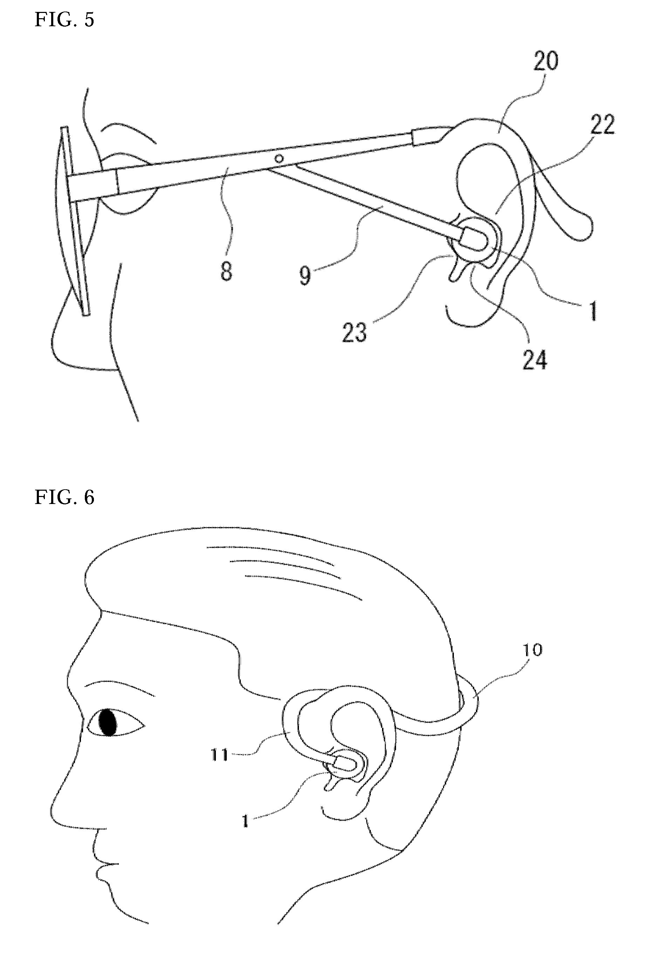

Referring to Figure 5, the temple 8 has an ear hook as with ordinary ones, and the bone conduction speaker is attached to the tip end of an auxiliary arm 9, which branches off from a midway point on the temple 8 and extends toward the external auditory meatus 21. In this case, in order that the main body 1 of the bone conduction speaker attached to the tip end of the auxiliary arm 9 can be aligned with the external auditory meatus of each individual user, the auxiliary arm 9 is designed to be retractable as with the temple 8 described above and/or pivotally attached to the temple 8.

Alternatively, the hearing device according to the present invention may be a headphone type as shown in Figure 6. In this case, a band part 10 is made of a metal, a plastic or an elastic material, such as rubber. Ear hooks 11 are attached to the opposite ends of the band part 10, and the bone conduction speaker having any of the configurations described above is attached to the tip end of each of the ear hooks 11.

The present invention has been described in some detail with regard to most preferred embodiments thereof. However, it is obvious that various different embodiments can be devised without departing from the spirit and scope of the present invention. Therefore, the present invention is not limited to those specific embodiments but limited only by the accompanying claims.

### Brief Description of the Drawings

Figure 1 shows exemplary configurations of a bone conduction speaker according to the present invention;
Figure 2 is a perspective view of an example of a spectacles-type hearing device using the bone conduction speaker according to the present invention;
Figure 3 shows the example of the spectacles-type hearing device using the bone conduction speaker according to the present invention in use;
Figure 4 is an enlarged cross-sectional view taken along the line A-A in Figure 3;
Figure 5 shows another example of the spectacles-type hearing device using the bone conduction speaker according to the present invention; and
Figure 6 shows an example of a headphone-type hearing device using the bone conduction speaker according to the present invention in use.

## Claims

1. A bone conduction speaker, wherein, when the bone conduction speaker is fitted in an auricle, a part of a main body of the bone conduction speaker abuts against an entrance and/or a periphery of the entrance of an external auditory meatus to conduct a vibration of the entrance and/or the periphery of the entrance of the external auditory meatus, and a sound pressure caused by the vibration of the entrance and/or the periphery of the entrance of the external auditory meatus conducted by said abutting part is transmitted to a tympanic membrane through said external auditory meatus.

2. The bone conduction speaker according to Claim 1, wherein said part of said main body is configured to prevent said main body from blocking the external auditory meatus.

3. The bone conduction speaker according to Claim 1 or 2, wherein said part of said main body is a substantially C-shaped engaging part that is held by a shaft over a diaphragm surface of said main body and abuts against the entrance and/or the periphery of the entrance of the external auditory meatus.

4. The bone conduction speaker according to Claim 1 or 2, wherein said part of said main body is a protrusion that is formed on a diaphragm surface of said main body and abuts against the entrance and/or the periphery of the entrance of the external auditory meatus.

5. The bone conduction speaker according to Claim 1 or 2, wherein said part of said main body is a member that is formed on a diaphragm surface of said main body and abuts against the entrance and/or the periphery of the entrance of the external auditory meatus, and said member has one or more grooves radially extending from a center thereof.

6. A spectacles-type hearing device, comprising:
a bone conduction speaker according to any of Claims 1 to 5 attached to a tip end of a temple having no ear hook,
wherein the spectacles-type hearing device can be worn by engaging said bone conduction speaker in an auricle.

7. The spectacles-type hearing device according to Claim 6, wherein said temple is retractable.

8. A spectacles-type hearing device, comprising:
a bone conduction speaker according to any of Claims 1 to 5 attached to a tip end of an auxiliary arm that branches off from a midway point on a temple having an ear hook and extends toward an external auditory meatus.

9. The spectacles-type hearing device according to Claim 8, wherein said auxiliary arm is retractable.

10. The spectacles-type hearing device according to Claim 8 or 9, wherein said auxiliary arm is pivotally attached to said temple.

11. A headset-type hearing device, comprising:
a bone conduction speaker according to any of Claims 1 to 5 attached to a tip end of a band worn around a top or back of a head or a neck.
